(19) Europäisches Patentamt
European Patent Office
Office européen des brevets

(11) Publication number : **0 500 361 A2**

# (12) EUROPEAN PATENT APPLICATION

(21) Application number : **92301394.0**

(22) Date of filing : **20.02.92**

(51) Int. Cl.$^5$ : **C08L 33/24,** C08L 101/00, // (C08L33/24, 101:00, 101:00), (C08L101/00, 51:00), (C08L101/00, 87:00)

(30) Priority : **21.02.91 US 658929**

(43) Date of publication of application : **26.08.92 Bulletin 92/35**

(84) Designated Contracting States : **AT BE CH DE DK ES FR GB IT LI NL**

(71) Applicant : **ROHM AND HAAS COMPANY**
**Independence Mall West**
**Philadelphia Pennsylvania 19105 (US)**

(72) Inventor : **Harvey, Noel Gray**
**120 Highland Avenue**
**North Wales, Pennsylvania 19454 (US)**
Inventor : **Bortnick, Newman Mayer**
**509 Oreland Mill Road**
**Oreland, Pennsylvania 19075 (US)**
Inventor : **Hallden-Abberton, Michael Paul**
**964 Whitney Lane**
**Maple Glen, Pennsylvania 19002 (US)**
Inventor : **Queenan, Robin Bepler**
**1225 Hunt Club Lane**
**Media, Pennsylvania 19063 (US)**
Inventor : **Goldman, Theodore Daniel**
**1290 General DeFermoy Road**
**Washington's Crossing, PA 18977 (US)**

(74) Representative : **Angell, David Whilton et al**
**ROHM AND HAAS (UK) LTD. European Operations Patent Department Lennig House**
**2 Mason's Avenue**
**Croydon CR9 3NB (GB)**

(54) **Compatible polymeric blends.**

(57) Reactive copolymers of alkyl methacrylates containing glutaric anhydride units are useful in compatibilizing blends of two or more polymers to improve physical properties of the blend. The reactive copolymers are especially useful when the polymers to be blended are incompatible with each other, but separately compatible with the reactive copolymer. Compatibilization by the reactive copolymer may be enhanced in some cases by catalysis of the grafting reaction between the reactive copolymer and one or more of the polymers to be blended.

EP 0 500 361 A2

This invention is concerned with compatible polymer blends of improved physical properties formed from two or more matrix polymers compatibilized by a copolymer of a poly(alkyl methacrylate) containing glutaric anhydride units which has been reacted with one or more of the matrix polymers, and a process for preparing such blends.

It is well-known that two polymers when mixed are usually mutually incompatible and that the properties of the blend are usually poorer than an average calculated from the properties of each polymer. However, it is also known that some polymers are mutually compatible to the extent that one becomes dispersed within the other and the physical properties seen are then often enhanced over those predicted from the properties of each polymer. Further, some few polymers are truly miscible, to the extent that the blends are intimately mixed with other, the dispersion of one component in the other being very fine; this results in the blend behaving as an average of the two components. This invention is directed to the problem of providing polymer blends wherein the compatibility of polymer components is improved.

Compatibility is generally defined by the properties of the blend; when two polymers are compatible, a mixture will provide a stable blend possessing a useful balance of mechanical properties, such as tensile strength, tensile elongation and impact strength. Often these properties are improved over the properties of the component which is the continuous phase in the blend. The two polymers may be in domains large enough to produce a pronounced effect on optical clarity, and separate domains often may be readily seen by electron microscopy. Further, the polymers may exhibit two glass temperatures when measured by appropriate tests.

By contrast, a mixture of two incompatible polymers will exhibit poor mechanical properties, usually with a diminution of the properties of the polymer which forms the continuous phase in the mixture. Extensive phase separation will often occur during processing, resulting in layering of the polymer or delamination under mild stress or poor surface effects.

Because of the utility of compatibilized blends in a wide variety of uses for thermoplastics, especially the so-called "engineering resins", where the ability to improve certain deficiencies without sacrificing other desirable properties of the matrix or blended components is desired, means have been sought by many workers to improve compatibilization. Although there have been many attempts to predict materials which are compatible or will act as compatibilizers, selecting materials for compatible blends is still a matter of experimentation. Both low-molecular weight additives and polymeric additives have been employed as "compatibilizers". Compatibilizing polymers may function in several ways:

a) they may be compatible with both components of the blend, even if those components are incompatible with each other;

b) they may be compatible with one component and reactive with the other component.

c) they may be reactive with both components.

Similar interactions may be combined for compatibilizers which are useful for terpolymer blends.

Little is known as to whether copolymers of alkyl methacrylate containing units derived from glutaric anhydride, having units of the structure

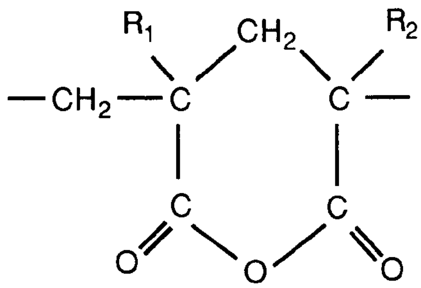

where $R_1$ and/or $R_2$ are hydrogen or lower alkyl, are miscible with polar polymers. US-A-4,888,387 teaches that blends of polymers containing units derived from methacrylic esters, vinyl aromatics such as styrene, methacrylic acid, dimethylglutarimide, and dimethylglutaric anhydride, are compatible with polyamides and polycarbonates. A second broad disclosure (US-A-4874824) without exemplification teaches that dimethylglutaric anhydride polymers derived from poly(methyl methacrylate) to affect compatibility of several polymer blends, including impact modifiers.

The broad utility of reactive copolymers derived from alkyl methacrylates with glutaric anhydride functionality in compatibilizing two or more matrix polymers, especially those which are incompatible with each

other, by grafting to one or more of the matrix components has not previously been specifically demonstrated, nor has the application of the "reactive" compatibilizer concept been taught or exemplified for such ternary and quaternary blends.

Throughout this specification, copolymers of at least one alkyl methacrylate containing glutaric anhydride units of the following structure

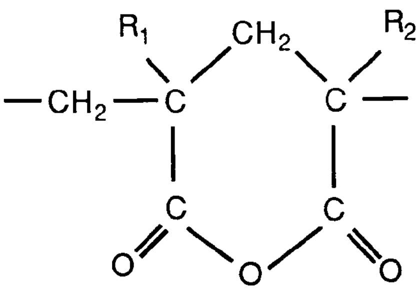

where $R_1$ and $R_2$ are H or $C_1$ - $C_{20}$ alkyl, will be referred to as "GLA" copolymer; prior to reaction with at least one matrix polymer, it will be referred to as "reactive GLA copolymer", and following such reaction, as "reacted GLA copolymer". Its structure will be detailed hereinafter.

This invention provides blends of at least three polymers, one component being at least one reacted GLA copolymer which is compatible or miscible with each of at least two of the other polymer components, the resulting composition exhibiting improved properties over a mixture of the said at least two other polymer absent the reacted GLA copolymer. The GLA copolymer must be reactive with and reacted to at least one of the matrix components.

The invention further provides such compositions where the said at least two other components or matrix polymers are not compatible with each other. It further relates to processes for preparing any of the above blends, including catalysis of the reaction between the glutaric anhydride functionality and terminal functional groups from the matrix polymer(s).

The compatible polymeric blends of the invention comprise reacted copolymer of at least one alkyl methacrylate and glutaric anhydride which prior to reaction contained units of the structure

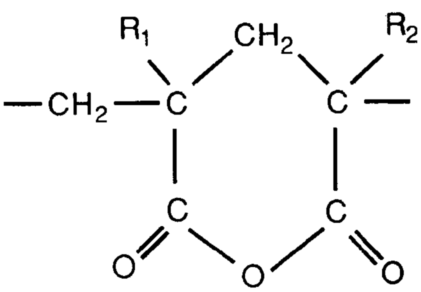

wherein $R_1$ and $R_2$ are separately H or linear or branched ($C_1$-$C_{20}$)-alkyl, a first matrix polymer, and a second matrix polymer, wherein the reacted copolymer is chemically grafted to either or both of the first matrix polymer or the second matrix polymer. The blend may further contain further matrix polymer. The invention includes such blends wherein the second matrix polymer is incompatible with the first matrix polymer in the absence of the reacted copolymer, and also such blends wherein the further matrix polymer is incompatible with at least one of either the first matrix polymer or the second matrix polymer in the absence of the reacted copolymer.

The blend may further contain at least one impact modifier, which has at least one component compatible with at least one of the components of the blend, and may further contain one or more fillers and/or reinforcing fibers.

The invention further provides a process for compatibilizing a mixture of polymers, comprising admixing by application of sufficient heat and shear sufficient to form an intimate mixture of a reactive copolymer of at least one alkyl methacrylate and glutaric anhydride containing units of the structure

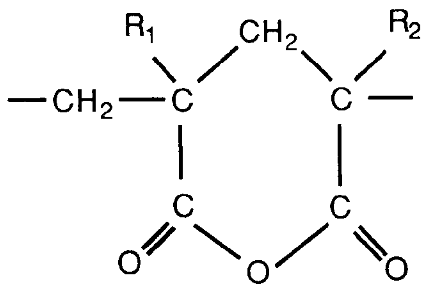

wherein $R_1$ and $R_2$ are separately H or linear or branched ($C_1$-$C_{20}$)-alkyl, first matrix polymer, and second matrix polymer, the application of heat and shear being sufficient to initiate a grafting reaction between the reactive copolymer with at least the first matrix polymer, and then extruding or molding the intimate mixture into a useful object. The process further encompasses the intimate mixture further containing further a matrix polymer. It further provides a process wherein the intimate mixture is processed into a cooled pellet or sheet and then subsequently extruded or molded into a useful object.

The invention further encompasses a process for forming the blends which comprises admixing a catalyst for the grafting reaction, the application of heat and shear in the presence of the catalyst being sufficient to initiate a grafting reaction between the reactive copolymer with the first matrix polymer; further matrix polymer may also be present.

The grafting reaction between the reactive copolymer and the first matrix polymer may be conducted prior to admixture of the second matrix polymer. The processes so described may be conducted in the presence of impact modifier, the impact modifier having at least one component compatible with at least one of the components of the blend, and/or in the presence of at least one of organic or inorganic fiber, non-reinforcing or reinforcing filler, stabilizer, lubricant, pigment, dye, processing aid, fire retardant, or antioxidant.

A variant of the process, to which the invention also extends, is to form the anhydride groups in situ from an appropriate starting material during the blending process, followed by reaction of the anhydride groups so formed with one or more of the matrix polymers. Thus a process for compatibilizing a mixture of polymers, comprises admixing by application of heat and shear sufficient to form an intimate mixture a copolymer of at least one alkyl methacrylate with methacrylic or acrylic acid with a second catalyst sufficient to form in situ from the second reactive copolymer a reactive copolymer of methyl methacrylate and methacrylic anhydride containing units of the structure

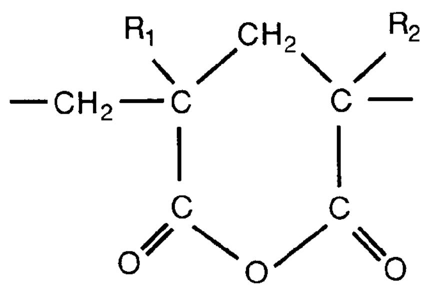

a first matrix polymer, a second matrix polymer, and optionally further matrix polymer, the application of heat and shear being sufficient to initiate a grafting reaction between the reactive copolymer with at least the first matrix polymer, and then extruding or molding the intimate mixture into a useful object. The mixture so formed may be first processed into a cooled pellet or sheet and then subsequently extruded or molded into a useful object.

The second catalyst may be the same as the catalyst for the grafting reaction, that is a strong base, or it may be a weaker base, such as a tertiary amine, It may be present in amounts from about 100 ppm (0.01%) to about 5000 ppm (0.5%), based on the amount of acid present in the starting polymer on which the glutaric anhydride functionality is formed, although lower and higher amounts may also be effective.

By a GLA copolymer is meant a polymer containing from at least about 1 weight percent to about 20 weight percent, and preferably from about 1 weight percent to about 10 weight percent, of units of the structure:

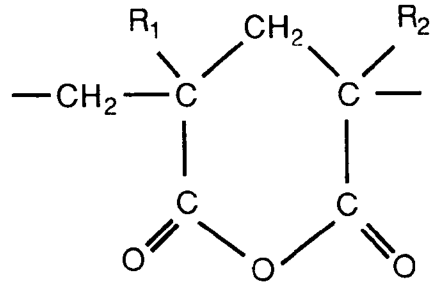

wherein $R_1$ and $R_2$ are separately H or linear or branched ($C_1$-$C_{20}$)-alkyl, preferably methyl. The predominant constituents of such GLA copolymers are units derived from at least one alkyl methacrylate, the alkyl group being from 1 to 20 carbon atoms. Preferred for imparting high service temperature, modulus, and better compatibility with polar polymers is methyl methacrylate. Other units in the GLA copolymer may for example be those derived from other methacrylate esters, such as aryl, alkaryl, aralkyl, cycloalkyl, and heterocyclic esters and substituted alkyl, aryl, alkaryl, aralkyl, cycloalkyl, and heterocyclic esters. Units may also be present derived from monomers such as from acrylic esters, such as from ethyl acrylate, methyl acrylate, butyl acrylate, and the like, from unsaturated anhydrides, such as maleic anhydride, itaconic anhydride, and the like, from unsaturated acids, such as methacrylic acid, acrylic acid, acryloxypropionic acid, and the like, from unsaturated amides, such as methacrylamide, and the like. Other monomers may be present, such as vinyl aromatic monomers, such as styrene, alpha-methylstyrene, and the like, acrylonitrile, vinyl esters, and the like. Monomers incapable of participating in the anhydride-forming reaction should not be present in the original precursor to be treated in amounts which would substantially prevent cyclization or anhydride formation. Thus a copolymer high in styrene, such as above 85% by weight, and relatively low in methyl methacrylate units, such as below about 15% by weight, and where the methyl methacrylate units are separated from each other, will form very few anhydride units on treatment and will not be useful in the present invention.

The GLA polymer may be treated as taught in, e.g., US-A-4,742,123, with ammonia or amines to form glutarimide units from some of the anhydride units. However, these units are far less reactive with the functional groups of the polymers to be compatibilized, and some of the anhydride functionality must be retained for reactivity with the matrix polymers.

The molecular weight (Mw or weight-average) of the GLA copolymer may preferably be from about 10,000 to about 500,000 or above. The lower limit is desired to obtain chain entanglements when blended with polar polymers or to achieve the maximum glass temperature enhancement. An upper limit of about 500,000 is preferred. At higher levels, polymer flow may be affected, and it is difficult effectively to achieve compatibility with the matrix polymers. Especially preferred is a molecular weight of from about 80,000 to about 100,000 (weight-average). Nevertheless, certain advantageous compositions may be obtained outside these preferred molecular weight ranges.

Although the full compositional range of ternary and quaternary and higher order combinations blends is contemplated in this invention, the most effective use of the GLA copolymers as a compatibilizing agent is at relatively low use levels; preferred is from about 1 weight percent of the blend with the matrix polymers to about 30 weight percent. Below that amount, an effect may not be noted in the properties of the blend, while above that level, the cost of the GLA copolymer additive may be excessive for the results achieved. However, in certain blends where higher heat distortion temperature is a desired property, larger quantities of the GLA copolymer, such as 50 weight percent or above, may be present in the blend.

The reactive GLA copolymers useful in the present invention may be prepared by a variety of ways known to the art. Thus polymers with adjacent units derived from methacrylic acid may be treated thermally to lose water, polymers of t-butyl methacrylate may be heated to lose isobutylene and then to form anhydride, and the like. A preferred process, especially when the polymer is to contain units only from methyl methacrylate and methacrylic anhydride is that of US-A-4,874,824, herein incorporated by reference, wherein a methacrylic ester polymer is heated with a secondary amine at a temperature of from about 150°C to about 400°C, preferably in a devolatilizing extruder, removing the amines, and isolating the desired product. Acid groups may also be present in the polymer after the formation of anhydride; these acid groups may also be capable of reaction with one or more of the matrix polymers, although it is expected the anhydride function will be more reactive.

It is also possible to prepare the anhydride-containing copolymer in situ by blending the matrix polymers with a copolymer containing methacrylic ester groups and acrylic or methacrylic acid groups and processing the mixture under heat and shear, preferably with the aid of a second catalyst for the formation of anhydride

groups from the acid and ester groups. The anhydride groups so formed will react with the functionality or functionalities in the matrix polymer to form the graft copolymer. The anhydride-containing polymer may alternatively be formed in situ by any of the other known methods noted in the preceding paragraph.

A wide variety of matrix polymers are useful in the blends compatibilized with the reacted GLA copolymer. In general the matrix polymer should be polar, which means that functional groups or coupling groups in the polymer chains are present which bear oxygen, nitrogen, or sulfur moieties. It is preferred that these groups be carbonyl, hydroxyl, carboxyl, or mono- or di-substituted amine; if the groups are coupling, preferred are primary amine or hydroxyl (including phenols). Purely aliphatic or aromatic polymers, such as polyethylene, polypropylene, or polystyrene, which bear no such polar functionality, are incompatible with the GLA copolymers, but may be utilized if the polymers contain appropriate coupling groups. Of the polar polymers useful as matrix polymers, there are several which are expected to possess functional groups in theory capable of chemical combination with the anhydride groups of the reactive GLA copolymers. This chemical combination may be caused simply by the time, heat, and shear conditions of the blending operation, especially if conducted in a devolatilized extruder which will remove any low molecular-weight by-products and so drive the reaction to high conversion. In other instances, a catalyst may be supplied, which may either cause a coupling reaction to occur, or cause an existing reaction to proceed to higher conversion. Useful catalysts for such coupling reactions may be low levels of strong bases, such as sodium hydroxide.

If the first and second matrix copolymers are both aromatic polyesters, the first and second matrix copolymers are not identical. The chemical or grafting reaction, that is, the reaction which causes the reactive GLA copolymer and the matrix polymer to form a chemical link, may be conducted between the reactive GLA copolymer and any or all of the matrix polymers, although usually only one will have the appropriate reactive functionality.

The present invention encompasses blends where the matrix polymers might be judged to be compatible in the absence of the compatibilizing reacted GLA copolymer, but whose properties are further improved by the presence of the reacted GLA copolymer, which increases the extent of compatibilization, as well as contributing such advantages as higher service temperature, adhesion to glass, and the like.

Particularly useful as matrix components are polyamides, especially aliphatic polyamides such as nylon 6,6 (polyhexamethylene adipamide), nylon 12 (polydodecyllactam), nylon 6 (polycaprolactam), and the like. Especially preferred is polycaprolactam.

Another useful matrix polymer class is polyesters, especially aromatic polyesters, such as polyesters of aliphatic glycols and terephthalic or isophthalic acid. Among these are poly(ethylene glycol) terephthalate (PET), poly(1,4-butylene glycol) terephthalate (PBT), cyclohexanedimethanol terephthalate, and copolymers of these glycols and acids.

Another useful matrix polymer class is polycarbonates, by which is meant polymers containing the structure

-Ar-O-C(O)-O-wherein Ar is an aryl group containing two sites of reactivity for bonding to form a carbonate group, i.e., derived from a dihydroxy aromatic such as 1,4-dihydroxybenzene, p,p′-isopropylidene diphenol, p,p′-sulfonyldiphenol, and the like.

Those listed are reactive matrix polymers. The following are believed to be unreactive with the reactive GLA copolymers, but are still useful in blends with the reacted GLA polymer and a reactive matrix component.

Another useful matrix polymer is acrylonitrile-styrene copolymer, either as such or in combination with a butadiene-based elastomer, such as in ABS (acrylonitrile-butadiene-styrene) resins.

A further useful matrix polymer is a polymer comprised predominantly of units derived from one or more alkyl methacrylate monomers, especially one comprised predominantly of units derived from methyl methacrylate. The utility may be further enhanced by also having present an impact modifier useful in toughening poly(methyl methacrylate), such as a core/shell modifier based on a butadiene or alkyl acrylate rubber, such as poly(butyl acrylate), and an outer shell based on a poly (alkyl methacrylate), especially poly(methyl methacrylate). Especially useful are the "hard core" impact modifiers for poly(methyl methacrylate) taught by US-A-3,793,402.

Another useful matrix polymer is poly(vinyl chloride), by which we mean homopolymers of vinyl chloride and also copolymers of at least about 80 weight percent vinyl chloride with co-monomers such as vinyl acetate, vinylidene chloride, ethylene, and the like. The GLA copolymers can be used to compatibilize poly(vinyl chloride) with a third polymer to make useful blends. For example, a goal of PVC producers is to produce PVC products with improved resistance to distortion by heat, for uses such as vinyl siding, hot-fill applications, electronic cabinets, and the like. Blends of GLA copolymers with PVC and a third polymer, such as a polyamide, may be useful for this purpose. For many uses, it is desired to obtain resistance to sag or pressure under relatively low load conditions, such as under the weight of the object alone, such as vinyl siding, or as tested by a low load test, such as a determination of Vicat softening temperature under load at 10 N.

Other preferred second matrix polymers include a copolymer or graft copolymer containing a styrene-acrylonitrile copolymer, an aromatic polyester, a polymer of an alkyl methacrylate, a multilayer polymer with an inner layer of a poly(alkyl acrylate) and an outer layer of a poly(alkyl methacrylate), copolymers of ethylene with polar monomers, such as alkyl acrylates or glycidyl methacrylate.

The ternary and quaternary blends of the present invention may contain impact modifiers to enhance resistance to breakage. Such impact modifiers will be present at from about 5 to about 30 parts per 100 parts of blend, although higher or lower levels may be used. The impact modifiers are generally blended with the other components of the blend and taken through the various processing and forming steps. The impact modifiers may contain appropriate thermal stabilizers, such as phenolic antioxidants, thio compounds, organophosphorous compounds, and the like.

Such impact modifiers include rubbers, such as butadiene-based copolymers, ethylene-propylene and ethylene-propylene-diene rubbery copolymers, acrylic rubbers, such as poly(butyl acrylate), and the like. More commonly, they are core/shell or multi-staged elastomers, often prepared in and isolated from emulsion, wherein the core or first stage is a rubbery polymer of the type described earlier, and the shell or outer stage is a harder polymer compatible with at least one component of the blend. Such impact modifiers include staged polymers of methyl methacrylate polymers onto poly(butyl acrylate), staged polymers of styrene-acrylonitrile onto a butadiene polymeric first stage, graft copolymers of methyl methacrylate onto a butadiene-styrene copolymer, graft copolymers of styrene-acrylonitrile onto an ethylene-propylene rubber, and the like. The outer stage may contain functionality reactive with the GLA copolymer, but such functionality is not required.

The compatibilized blends containing reacted GLA copolymers may be further modified by the incorporation of glass or other reinforcing fibers, or particulate fillers or reinforcing agents such as talc or other minerals, carbon black, glass spheres, or metallic particles. In general, the reacted GLA copolymer components will exhibit good adhesion to glass and other inorganic fillers. Further modification of properties of these blends can be obtained by incorporating additives such as flame retardants, blowing agents, aniioxidants, thermal stabilizers, pigments, flatting agents, lubricants, antistatic agents, conductive materials, toners or UV stabilizers.

The compatibilized blends of nylon polymers with other thermoplastic resins such as styrene/acrylonitrile, ABS, poly(alkylene terephthalates), and polycarbonate, or ternary combinations of the above will be useful for imparting higher melt viscosity, especially at low shear, for thermoforming and blow-molding uses, as items for automotive uses, such as wheel covers, trim, and covers, power tool housings, business machines and computer housings, bicycle wheels, bowling pins, tennis frames, and other recreational uses, and the like.

Similar uses to the polyamide blends will be seen with blends of polyesters, such as poly(ethylene terephthalate), poly(butylene terephthalate), and the like with other thermoplastics as compatibilized by the GLA copolymers of the present invention. Improvements in melt strength, flexural modulus, heat distortion temperature, and water resistance should prove useful in packaging applications and blow-molding applications.

The compatibilizing GLA copolymers of this invention, particularly those containing poly(N-methyl dimethylglutaric anhydride) segments, may be blended with combinations of other thermoplastic polymers (as used herein "-" indicates blended polymers, "/" copolymers, and "/ /"" graft or block polymers) such as butadiene/styrene/(meth)acrylic, styrene/(meth)acrylic, and (meth)acrylic multistage polymers; polyamides, polyamide-multistage polymer blends, ethylene/vinyl acetate, styrene/acrylonitrile, styrene/ acrylonitrile-multistage polymer blends,styrene/acrylonitrile-ethylene/propylene/diene rubber blends, alpha-methylstyrene/acrylonitrile, alpha-methylstyrene/styrene/ acrylonitrile, alpha-methylstyrene/methyl methacrylate/ethyl acrylate, butadiene/ /acrylonitrile/styrene, polycarbonate, polycarbonate-multistage polymer blends, polybutylene terephthalate, polybutylene terephthalate-polycarbonate blends, polybutylene terephthalate-polycarbonate copolymers, polybutylene terephthalate-multistage polymer blends, polybutylene terephthalate/polytetrahydrofuran, polyvinyl chloride, polyyinyl chloride-multistage polymer blends, polyvinyl chloride-(meth)acrylate blends, chlorinated polyvinyl chloride, acrylonitrile/(meth)acrylate-multistage polymer blends, acrylonitrile/(meth)acrylate/styrene, epichlorohydrin/bisphenol-A copolymers, (often designated "phenoxy" resin), polyethylene terephthalate or other polyalkylene terephthalate, polyethylene terephthalate-glycol modified, polyethylene terephthalate-polycarbonate blends, polycaprolactone, polyarylate, copolyester of bisphenol-A with isophthalic and/or terephthalic acids, poly(meth)acrylates, polyacetal, styrene/maleic anhydride, styrene/maleimide, polyvinylidene fluoride, polyvinylidene fluoride-multistage polymer blends, cellulosics, polyethylene oxide, polyamideimide, polyetherester, polyetheresterimide and polyetherimide, polyphenylene sulfide, polyphenylene oxide, polysulfone, polyphenylene oxide- polystyrene blends, polyphenylene oxide-high impact polystyrene blends, polyvinylidene chloride, polyvinylidene chloride/(meth)acrylonitrile, polyvinylidene chloride/(meth)acrylate, polyvinyl acetate, polyetheretherketone, thermoplastic polyanhydrides, and other polymer types. random or block copolymers which combine the different functionalities can also be used, and quaternary or higher blends can be made from combinations of any of these polymer types with the GLA copolymer compatibilizers.

The process for compatibilizing involves mixing the matrix polymers, compatibilizing agent (that is, the reactive GLA polymer), and optionally other components, such as filler, fiber, impact modifier, other additives, catalyst, and the like, and subjecting the mixture to intensive mixing under heat conditions which will lower the melt viscosity of the polymeric components, cause intimate mixing, allow for any coupling reactions to occur, yet not degrade or discolor any of the components, then forming the resulting mixture either into a strand, pellet or the like for further processing, or directly processing the blend into a useful form, such as a film, sheet, or molded object.

Intensive mixers, such as Banbury mixers, Brabenders mixers, and the like may be used, as may be mill rolls, but admixture in a single or twin-screw extruder is the preferred process.

Certain additives may be added to the mixture while the molten blend is being processed into pellets, sheet, strands, and the like, but after the more severe blending conditions at the beginning of the blending operation. Such additives may include lubricants, thermal stabilizers, pigment, dyes, and the like.

It is also possible to pre-compound one of the matrix polymers with the reactive GLA copolymer in a manner sufficient to accomplish grafting or coupling, then use the chemically-attached mixture in blending with one or more other matrix polymers, further using fillers, impact modifiers, stabilizers, and the like, where required.

Blends of matrix polymers compatibilized with the GLA copolymers of the present invention will be useful in a variety of applications. Combinations can be realized which exhibit toughness, heat resistance, processability, low moisture absorption, good surface appearance, chemical resistance, creep resistance, and the like; with suitable additives, weatherable and radiation resistant compounds can be achieved. Such blends are particularly useful in the form of a molded object, sheet, or film.

Uses in automotive, such as car, bus, truck, and motorcycle, applications include instrument panels, deck shelves, interior post surrounds, window surrounds, air vents, visors, wheel covers, spoilers, wheel wells, head rests, protective grills, arm rests, fascia, seatbacks, rocker panels, bumpers, handles, interior and exterior trim, fasteners, body panels, and certain under-the-hood uses, such as fluid containers, distributor caps, valve covers, damping insulation, and the like. Similar uses may be found for such blends in other transportation areas, such as as railroad cars and airplanes, such as in seating, seat surrounds, lavatory facilities, luggage compartments and bins, tray tables, and the like.

Non-automotive applications may include construction uses, such as windows, doors, window and door frames, siding, pipe, gutters, downspouts, air conditioning ducts, traps, weatherstripping, gaskets, fencing, replacement for wooden railroad ties, plastic bricks, concrete filler, hardware fixtures such as cabinet hinges, axles, lock mechanisms, electrical outlet plates and child-proof safety plugs, lavatory and bath units, cabinets, and the like; business machines, such as computer housings, keyboards, TV cabinets, and the like; appliances, such as refrigerator shells and door liners, washer panels, portable appliance housings, electrical insulation, power tool housings, such as for drills, sanders, saws, and the like; electronic and electrical uses, such as circuit-board assembly, lamps, support for computer components, housings for stereo units, and the like; musical instrument housings, piano keys, guitar picks, and the like; consumer products, such as trash disposal containers, camera,portable tape recorder, and VCR housings, housings for lawnmowers and snowblowers, lawn edgings, washing machine tubs, attache cases, suitcases, shades, pump components, modular furniture, baskets, bowls, pots and containers for plants, open-structured containers, and the like.

Certain of these blends will be clear or will transmit light readily, and may have additional uses such as glazing, drinking containers, high intensity light fixtures, lenses, laboratory ware, translucent or transparent medical ware, translucent or transparent food packaging, and the like.

Non-woven fabrics may be formed which may be useful as clothing, sheets, bandages,carpet backing, doll hair, webbing, cigarette filters, strapping, rope, twine, bristles, rugs, and the like.

Toys or recreational objects, such as small molded dolls, toy automobiles, and the like, tricycle components, bicycle components, interlocking building pieces, novelty items, encapsulated magnets, surfboards, boat decks, swimming pool floats, swimming pool liners, frisbees, snow sliding toys, ski equipment, gameboards, and the like, may be prepared by conventional processing techniques.

The blends of the present invention may be useful in food applications, such as containers for food and drink, films for food packaging, such as coextruded film with barrier properties, as bags and other carriers, as freezeable, ovenable, or microwaveable trays, microwaveable cookware, and the like. They may also be useful in medical applications, such as containers, films, bags for drainage, ostomy, dialysis, and the like.

EXAMPLE 1

This example describes the preparation of a copolymer containing glutaric anhydride units. A granular polymer consisting of essentially 100 % units derived from methyl methacrylate and of approximately 130,000 (weight average molecular weight) was added at a rate of 80.0 g/min to the feed zone of a 20.3 mm. counter-

rotating tangential twin screw extruder operating at 500 RPM. The polymer was conveyed through a feed zone (10.2 length/diameter units long {L/D}) operated at a set temperature of 200 °C, and over a melt blister (30.4 mm. in length) into a pressurized reaction zone (31.5 L/D) operated at a set temperature of 302 C, into which dimethylamine was introduced by pumping at a rate of 2.0-3.5 cc/min. at 3160-3630 kPa pressure at a point about 1.5 L/D downstream from the end of the melt blister. The excess amine and gaseous by products were removed via a pressure regulated valve set to 3160-3630 kPa at a point 27.0 L/D downstream from the end of the melt blister.

The polymer melt was then conveyed over a second melt blister 45 mm. long and into a 19.8 L/D devolatilizing zone at 302 C and 8.5 kPa pressure (sub-atmospheric). The screw in this zone consisted of a single lead, and the vacuum vent was positioned at a point 10.0 L/D downstream from the end of the melt seal. The polymer exited the extruder from a melt die, was briefly cooled in a water bath, and was stranded, pelletized, and collected.

The product polymer had a Vicat softening temperature (ASTM DI 525-70) of 127.0°C, and was analyzed for mole % anhydride and methacrylie acid (MAA) by the titrimetric procedure described below. MAA and anhydride are then converted to weight % values and weight % MMA is calculated by difference. IR spectroscopy was used to confirm the anhydride and MMA content. The product composition by these methods was (weight %) 90.8 % methyl methacrylate, 8.6 % methacrylic anhydride, and 0.6 % methacrylic acid.

The mole % of MAA was determined by a potentiometric titration of a 0.13 g sample of polymer dissolved in 50.0 cc $CH_2Cl2$ / 50.0 cc CH3OH with a known amount (excess) of 0.1 N NaOH (ca. 0.25 mmole) added at a rate of 0.167 cc/min. at room temperature. The mmole of MAA is calculated from the potentiometric transition (COOH ==> COO-Na+). The sample was then stirred for a period of 20 minutes and back titrated with 0.1 N HCl (ca. 0.40 mmole) at a rate of about 0.267 cc/min. The total acid level (MAA + Anhydride) is taken as the difference between the titer of the first transition (OH- ==> HOH) and the second transition (COO- ==> COOH). Since the half-esterification reaction of anhydride in the presence of methanolic NaOH is nearly quantitative, consumption of only one equivalent of NaOH is assumed for each anhydride group (CO-O-CO ==> COO-Na+ CH3OCO). Therefore, the titer of anhydride is calculated as the difference between the forward titer (MAA) and the back titer (MAA + Anhydride). To enable easier detection of the forward titration, a small aliquot of a known amount of 0.1 N HCl was added to the sample prior to titration (ca. 0.015 - 0.030 mmole, known accurately). This amount was subtracted from the quantity of NaOH to the end point in the forward titration. Titrations were performed potentiometrically on a VIT-90 Titralab Radiometer automatic titration device with a SAM-90 sampling stand equipped with a double junction reference electrode K901 (LiCl) and a separate glass (pH) electrode (Radiometer G-202C).

EXAMPLES 2 - 4

These examples describe the preparation of a grafted copolymer consisting of an acrylic copolymer containing anhydride units and a polyamide containing caprolactam (epsilon-aminocaproic acid) units, both with and without a basic catalyst. The use of a basic catalyst gives rise to a more highly grafted polymer which also contains ionomeric groups on the polymer backbone. Prior to extrusion, a 50/50 mixture of Example 1 copolymer and poly(caprolactam) (Capron 8202) was prepared by dry-blending, drying at 50 °C under vacuum for at least 2 hours and storing in poly(ethylene) bags prior to extrusion. This mixture was fed, at a rate of 50.0 g/min, into a 62.5-L/D (length/diameter), 20.3 mm. Welding Engineers twin-screw, counter- rotating extruder (obtained from Welding Engineers, Inc., Blue Bell, PA) operating at a screw speed of 300 rpm, with the reaction zone set to a temperature of 250-300 °C. The extruder had three vents, all run under full vacuum. Samples were extruded as strands and cut into pellets prior to molding or analysis for grafting. This blend is Example 2.

For Example 3 (and other examples where catalysis is used), prior to extrusion grafting, the desired amount of NaOH catalyst (for Example 3, 500 ppm) was introduced to the blend by coating it onto the Example 1 polymer pellets in the following manner. The appropriate amount of reagent grade NaOH was dissolved in methanol solvent (spectrophotometric grade), the solution was added to Example 1 polymer pellets in a rotary evaporator, and the solvent was removed with continuous rotation under vacuum until the free-flowing Example 1 polymer pellets were evenly coated with a thin NaOH film. The pellets were dried at 50°C under vacuum for 2-16 hours, and were then mixed with additional virgin Example 1 polymer and polyamide pellets; the mixed pellets were stored in poly(ethylene) bags prior to extrusion. Processing was as in Example 2.

The blends of Examples 2 and 3 were analyzed after the processing step as follows: A 0.400 +/-.001 g sample of the reacted polymer blend was dissolved in 50 ml of 85/15: m-cresol/methanol (v/v) with stirring at room temperature. The polymer solution was then slowly added to 300 ml of rapidly stirred acetone at room temperature. The flocculated precipitate was then filtered using a fine (4-8 micron) fritted glass filter, and

washed with four 15-ml portions of acetone. This precipitated polymer (Fraction "A") was carefully removed and weighed after drying at 140° C for 16 hours (no cresol odor should be present). The empty filter was washed with three 10-ml portions of acetone; these washes were combined with the previous cresol solution and washes. This solution was concentrated on a rotary evaporator at 70° C to a volume of about 55 ml. The concentrate was cooled to room temperature and then added slowly to a rapidly stirred solution of 400 ml petroleum ether (obtained from Aldrich Chemical Co., Milwaukee, WI, bp. 30-60° C). The fine precipitate ("B") was next filtered off with a fine fritted glass filter, and washed twice with 25 ml petroleum ether prior to drying at 140° C for 16 hours.

Infrared spectra were obtained on cast films (on KBR) from 2 % m-Cresol solution for the fraction "A" samples, and from 2 % THF solutions for the fraction "B" samples. The % grafting levels could also be confirmed from the ratio of acrylic to Nylon carbonyl peaks in the IR spectra of the fraction "A" samples. Subsequent spectroscopic analysis of fractions "A" reveal it to contain almost all of the polyamide, both grafted and ungrafted, whereas fraction "B", containing the ungrafted Example 1 polymer, contains almost no polyamide.

Calculations for the percentage of Example 1 polymer to which the polyamide is grafted and the percentage of ungrafted Example 1 polymer are based on deviations from the theoretical 50 % recovery levels anticipated from the original blend compositions in the absence of grafting reaction. The fractionation results are shown in Table I for the extruded (grafted) Examples 2 and 3, and for the unextruded solvent-mixed (ungrafted) control Example (comparative Example # 4). Slight negative values in the % Grafted Example 1 polymer controls are due to small weight losses in transfer, therefore judging from the control Examples (Ex # 4 and 22), the determined grafting levels are probably falsely low by 1-3 %. The results in Table I show that the reactively extruded Examples 2 and 3 have a large portion of the Example 1 polymer grafted to poly(caprolactam)polymer. The use of basic catalyst increases the grafting level and gives an ionomeric- graft copolymer structure.

TABLE I

| Example No. | NaOH (ppm) | Composition of Sample Nylon/ Ex #1 ( % / % ) | % Ex# 1 Grafted to Nylon (% ) | % Un-Grafted Example 1 ( % ) |
|---|---|---|---|---|
| 2 | 0 | 50.0 / 50.0 | 43 | 45 |
| 3 | 250 | 50.0 / 50.0 | 48 | 21 |
| 4 | 0 | 50.0 / 50.0(a) | -2.7 | 94 |

(a) solvent-mixed, unextruded

EXAMPLES 5 - 8

These examples illustrate the improvements in elongation and unnotched Izod strength when either the glutaric anhydride containing polymer of Example 1 or the pre-compounded graft copolymer of polyamide/ /co-poly(methyl methacrylate/ /glutaric anhydride) (Example 2) were blended with a 1:1 mixture of a commercial polycaprolactam, MW 20,000-30,000; amine content=50 meq/ kg. a commercial impact-modified poly(methyl methacrylate), Oroglas DR. Blends were made in a Killion single-screw extruder with a high shear screw, compression ratio 3/1, and molded to prepare test specimens on an Arburg All-Rounder screw injection molding machine at a barrel temperature of 240-260°C. Testing was done by conventional ASTM methods.

| Example | Weight percent polymer of Example | % Elongation | Unnotched Izod (Joules/meter) |
|---|---|---|---|
| 5 | 0 (control) | 37 | 747 |
| 6 | 10 (Ex. 1) | 148 | 3097 |
| 7 | 20 (Ex. 1) | 117 | 2571 |
| 8 | 20 (Ex. 2) | 127 | 578 |

EXAMPLES 9 - 12

In this example is demonstrated that the methyl methacrylate polymer containing glutaric anhydride units is effective in improving the impact strength of poly(caprolactam) containing a non-functionalized impact modifier. The blend consists of 4 parts of the caprolactam polymer of Examples 5 - 8 and one part of a commercially available impact modifier containing a core of ca. 80 parts of a crosslinked butyl acrylate and a shell partially grafted to the core of poly(methyl methacrylate). The improvement in notched impact strength is readily seen. Blending, molding and testing were by methods essentially those of Examples 5 - 8.

| Example | Weight percent Polymer of Example | Notched Izod (Joules/meter) |
|---|---|---|
| 9 | 0 (control) | 50 |
| 10 | 10 (Ex. 1) | 158 |
| 11 | 10 (Ex. 2) | 110 |
| 12 | 10 (Ex. 3) | 120 |

EXAMPLES 13 - 15

These examples illustrate the improvements in elongation and toughness when the poly(methyl methacrylate) containing glutaric anhydride units was added to a 1/1 weight mixture of polycaprolactam and bisphenol A polycarbonate.

| Example | Weight percent polymer of Example | % Elongation | Unnotched Izod (Joules/meter) |
|---|---|---|---|
| 13 | 0 (control) | 74 | 230 |
| 14 | 10 (Ex. 1) | 86 | 417 |
| 15 | 20 (Ex. 1) | 110 | 390 |

EXAMPLES 16 - 19

In a similar manner, when the polymer of Example 1 is blended at least the 10 weight percent level with an equal weight mixture of polycaprolactam/ /styrene-acrylonitrile ca. 75/25 copolymer (Example 16) or with a similar mixture of polycaprolactam/ / ABS polymer (Example 17), the tensile properties are improved over those predicted for the averaged properties of the components. Likewise, when equivalent weights of polycaprolactam and poly(ethylene terephthalate) are blended (Example 18), addition of at least 10 weight percent of the polymer of Example 1 (Example 19) will show a positive effect on the low shear viscosity of the blend, from which can be predicted a higher melt strength, useful in thermoforming and blow molding applications.

EXAMPLES 20 - 22

These examples describe the preparation of a grafted copolymer consisting of an acrylic copolymer containing anhydride units and a polyamide containing Nylon-6,6 units, both with and without a basic catalyst. The use of a basic catalyst gives rise to a more highly grafted polymer which also contains ionomeric groups on the polymer backbone. The grafted polymer was prepared under the same conditions as described in examples 2 and 3, using Nylon-6,6 (Zytel-101) instead of Nylon-6. In example 20, 250 PPM of NaOH (based on total polymer) was added in a fashion similar to example 3.

| Example No. | NaOH (ppm) | Composition of Sample Nylon/ Ex #1 ( % / % ) | % Ex# 1 Grafted to Nylon (% ) | % Un-Grafted Example 1 ( % ) |
|---|---|---|---|---|
| 20 | 0 | 50.0 / 50.0 | 39 | -- |
| 21 | 250 | 50.0 / 50.0 | 56 | -- |
| 22 | 0 | 50.0 / 50.0 (a) | -1.2 | 77 |

(a) solvent-mixed, unextruded

The polymers of Examples 20 and 21 will be useful in improving the properties of blends of nylon-6,6 (polyhexamethylene adipamide) with other polymers polars in a manner very similar to that described in Examples 5 and those following for blends of nylon-6 (poly(caprolactam)).

EXAMPLE 23

In a similar manner, a commercial poly(ethylene terephthalate) containing 3% isophthalate units, intrinsic viscosity 0.85 dl./g. was combined with the poly(glutaric anhydride) of Example 1 in a 9/1 ratio and processed on a Haake Rheocorder at 266 °C, shear speed 60 rpm; a 60-gram shot was used. The equilibrium torque after 5 minutes of shear for the un-modified polyester was ca. 190 meter-grams; expected for the blend if no interaction occurred would be 270 meter-grams; found was 360 meter-grams, indicating a chemical interaction had occurred between the polyester and the anhydride-containing polymer.

The inter-reacted blend will be useful in ternary blends with polyacetal, styrene-acrylonitrile-based polymers, such as ABS, phenoxy resin, and the like.

The words Oroglas, Killion, Zytel, Rheocorder, All-Rounder, Titralab, Radiometer and Capron are trademarks which may be registered in some or all designated states.

## Claims

**1.** A compatibilised polymeric blend comprising:

(a) reacted copolymer which is the product of reaction of at least one alkyl methacrylate and glutaric anhydride containing units of the structure

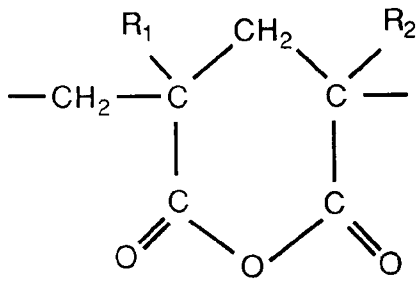

wherein $R_1$ and $R_2$ are individually H or $(C_1\text{-}C_{20})$alkyl;
(b) first matrix polymer; and
(c) second matrix polymer; wherein the reacted copolymer is chemically grafted to either or both of the first and second matrix polymers and, optionally,
(d) third matrix polymer.

2. A blend as claimed in Claim 1 wherein at least two of the first, second and (if present) third matrix polymers are mutually incompatible in the absence of the reacted copolymer.

3. A blend as claimed in Claim 1 or 2, wherein $R_1$ and $R_2$, are $CH_3$, wherein the alkyl methacrylate is methyl methacrylate, and wherein the weight-average molecular weight of the reacted copolymer is from 10,000 to 500,000, preferably from 80,000 to 100,000.

4. A blend as claimed in any preceding Claim which further contains
(a) at least one impact modifier which has at least one component compatible with at least one of the other components of the blend and, optionally
(b) one or more fillers or reinforcing fibers.

5. A blend as claimed in any preceding Claim, wherein the reacted copolymer is the product of reaction of copolymer containing from 1 to 20 weight percent of units of the structure

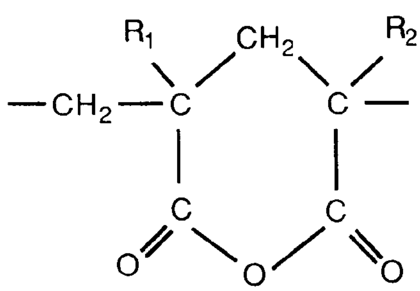

wherein $R_1$ and $R_2$, are $CH_3$, and where the alkyl methacrylate is methyl methacrylate.

6. A blend as claimed in any preceding Claim wherein the first matrix polymer is a polymer of a polyamide, an aromatic polyester, or an aromatic polycarbonate, preferably polycaprolactam, poly(ethylene terephthalate), poly(butylene terephthalate), or polycarbonate formed from p,p'-isopropylidenebisphenol, and/or the second matrix polymer is a copolymer or graft copolymer containing styrene-acrylonitrile copolymer, aromatic polyester, polymer of alkyl methacrylate, or multilayer polymer with an inner layer of poly(alkyl acrylate) and an outer layer of poly(alkyl methacrylate), with the proviso that if the first and second matrix copolymers are both aromatic polyesters, the first and second matrix copolymers are not identical; said blend optionally being in the form of a molded object, sheet, or film.

7. The use of reactive copolymer of at least one alkyl methacrylate and glutaric anhydride containing units of the structure

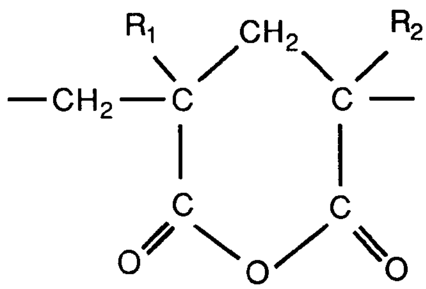

wherein $R_1$ and $R_2$ are individually H or $(C_1\text{-}C_{20})$-alkyl, to improve the mutual compatibility of other polymers in a blend therewith, at least one of said other polymers being grafted to said reactive polymer in the blend.

**8.** A process for improving the compatibility of otherwise less mutually compatible polymers comprising forming an intimate mixture of said polymers with reactive copolymer of at least one alkyl methacrylate and glutaric anhydride containing units of the structure

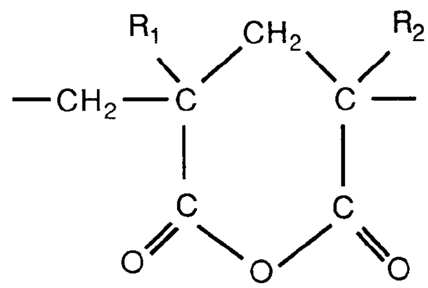

wherein $R_1$ and $R_2$ are individually H or $(C_1\text{-}C_{20})$-alkyl, at least sufficient heat and shear being applied, optionally in the presence of catalyst, to initiate grafting between said reactive polymer and at least one of said polymers.

**9.** A process as claimed in Claim 8 wherein the grafting reaction is carried out in the presence of only one of said polymers, the remaining polymer(s) being added subsequently.

**10.** A process as claimed in Claim 8 or 9 wherein the reactive copolymer is formed in situ, optionally in the presence of a catalyst for said formation.

**11.** A process as claimed in Claim 8, 9 or 10 which further includes

(a) the incorporation into the blend of one or more of the following ingredients: impact modifier having at least one component compatible with at least one of the other components of the blend, reinforcing fiber, filler, stabiliser, lubricant, pigment, dye, processing aid, fire retardant, antioxidant, and/or

(b) the further step of forming the blend into a pellet, sheet, film or other molded or otherwise formed article.